# EUROPÄISCHE PATENTSCHRIFT

(11) **EP 2 446 314 B1**
(45) Veröffentlichungstag und Bekanntmachung des Hinweises auf die Patenterteilung: **23.10.2019**
(21) Anmeldenummer: 10728594.2
(22) Anmeldetag: 19.06.2010
(51) Int. Cl.: G02B 21/00, G01N 21/64

(54) **VERFAHREN ZUM AUSWERTEN VON FLUORESZENZEREIGNISSEN IN EINEM MIKROSKOPBILD**
METHOD FOR EVALUATING FLUORESCENCE RESULTS IN A MICROSCOPE IMAGE
PROCÉDÉ D'ÉVALUATION D'ÉVÉNEMENTS FLUORESCENTS DANS UNE IMAGE MICROSCOPIQUE

(30) Priorität: 26.06.2009 DE 102009031231
(43) Veröffentlichungstag der Anmeldung: 02.05.2012
(73) Patentinhaber: Carl Zeiss Microscopy GmbH, 07745 Jena (DE)
(72) Erfinder: KLEPPE, Ingo, 07749 Jena (DE); KALKBRENNER, Thomas, 07745 Jena (DE); WOLLESCHENSKY, Ralf, 07743 Jena (DE)
(74) Vertreter: Loritz, Rainer
(86) Internationale Anmeldenummer: PCT/EP2010/003705
(87) Internationale Veröffentlichungsnummer: WO 2010/149319

(56) Entgegenhaltungen:
- US-A1- 2008 070 323
- KENNETH R CASTLEMAN ET AL: "FISH Image Analysis" IEEE ENGINEERING IN MEDICINE AND BIOLOGY MAGAZINE, IEEE SERVICE CENTER, PISACATAWAY, NJ, US, Bd. 15, Nr. 1, 1. Januar 1996 (1996-01-01) , Seiten 67-115, XP011084670 ISSN: 0739-5175
- NETTEN H ET AL: "Automation of fluorescent dot counting in cell nuclei" PATTERN RECOGNITION, 1994. VOL. 1 - CONFERENCE A: COMPUTER VISION & IM AGE PROCESSING., PROCEEDINGS OF THE 12TH IAPR INTERNATIONAL CONFERENCE ON JERUSALEM, ISRAEL 9-13 OCT. 1994, LOS ALAMITOS, CA, USA,IEEE COMPUT. SOC LNKD- DOI:10.1109/ICPR.1994.5762, Bd. 1, 9. Oktober 1994 (1994-10-09), Seiten 84-87, XP010215977 ISBN: 978-0-8186-6265-2
- ZHENFEI TAI ET AL: "Automatic Fluorescent Dot Counting in Interphase Cell Nuclei using Basis Pursuit Image Analysis" REGION 5 CONFERENCE, 2008 IEEE, IEEE, PISCATAWAY, NJ, USA, 17. April 2008 (2008-04-17), Seiten 1-4, XP031285295 ISBN: 978-1-4244-2076-6

## Beschreibung

Die Erfindung betrifft Verfahren zum Aufnehmen und Auswerten eines mehrere Bildelemente umfassenden Mikroskopbildes, das Intensitätsverteilungen von Fluoreszenzereignissen einer mit einer oder mehreren Sorten von transformierbaren Fluorophoren markierten Probe aufweist.

Forschungsgebiete wie die Systembiologie, die mit quantitativen Modellen biologische Systeme beschreiben will, sind auf quantitative Daten angewiesen. Solche Daten können mittels der Fluoreszenzmikroskopie bisher nur mit geringer Genauigkeit ermittelt werden, beispielsweise mittels eines "Flying-Spot"-Mikroskops (Pawley: "Biological Confocal Microscopy", Springer Verlag, 3. Auflage 2006, S. 6) oder durch Kalziumbildgebung (engl. "Calcium Imaging") (Pawley, S. 529), weil eine große Anzahl von Fehler- und Rauschquellen zu Intensitätsfluktuationen führt. Fehlerquellen sind beispielsweise die große Varianz der Poissonverteilung für Fluoreszenzereignisse, die Unsicherheit der Größe des mikroskopischen Detektionsvolumens, Detektorrauschen, photophysikalische Eigenschaften wie Quanteneffizienz, Anregungs- und Effizienzspektren und Bleichverhalten der Fluorophore. Weitere Unsicherheiten sind Unterschiede zwischen verschiedenen Fluorophorsorten, Beleuchtungsinhomogenitäten und Hintergrund- und Autofluoreszenz der Probe. Diese Fehler sind umso größer (oder fallen mehr ins Gewicht), je kleiner die untersuchten Volumina und damit die Anzahl der untersuchten der Moleküle sind und je größer das räumliche Auflösungsvermögen des Mikroskops ist.

Ein hohes Auflösungsvermögen des verwendeten Mikroskops ist jedoch für eine hohe räumliche Genauigkeit erforderlich. Das Auflösungsvermögen hängt von der sogenannten Punktübertragungsfunktion (engl. "Point Spread Function"; PSF) des Mikroskopobjektivs ab, die aufgrund der Beugung des von der Probe aufgenommen Lichts im Mikroskopobjektiv stets eine endliche Breite (räumlich: ein endliches Volumen) aufweist, so dass eine punktförmige Lichtquelle wie ein fluoreszierendes Molekül optisch auf eine endliche Fläche abbildet. Das Auflösungsvermögen eines Mikroskops ist daher grundsätzlich begrenzt (Abbe 1873). Im Stand der Technik sind jedoch mehrere Ansätze bekannt, um Bilder zu erzeugen, die höher aufgelöst sind, als diese grundsätzliche Grenze es zulässt (nachfolgend als "Hochauflösung" bezeichnet).

Beispielsweise kann durch eine strukturierte Beleuchtung der Probe in mehreren unterschiedlichen Phasenlagen (engl. "structured illumination microscopy"; SIM) das maximale Auflösungsvermögen lateral und axial etwa um einen Faktor zwei, in Verbindung mit nichtlinearer Anregung (engl. "saturated pattern excitation microscopy"; SPEM) sogar noch höher, verbessert werden. Zu diesem Zweck muss aus den zu den Phasenlagen sukzessiv aufgenommenen Einzelbildern ein Ergebnisbild mit entsprechend höherer Auflösung rechnerisch rekonstruiert werden. Die SIM ist beispielsweise in US 5,671,085, die SPEM beispielsweise in US 6,909,105 offenbart.

Aus WO 2006/127692 A2 ist zur Erhöhung des Auflösungsvermögens die Verwendung photoschaltbarer Fluoreszenzfarbstoffe bekannt (engl. "Photo-activated Localization Microscopy"; PALM, auch PAL-M). Durch Licht sehr geringer Intensität bei einer Aktivierungswellenlänge wird eine äußerst geringe Anzahl zufällig verteilter Fluoreszenzfarbstoffmoleküle (Fluorophore) in einen anregbaren Zustand transformiert (aktiviert) und anschließend auf bekannte Weise durch Licht einer Anregungswellenlänge zur Fluoreszenz angeregt. Die übrigen, nichtaktivierten Fluorophore lassen sich durch die Anregungswellenlänge nicht zur Fluoreszenz anregen. Aufgrund der zufälligen Verteilung liegen die aktivierten und angeregten Fluorophore in der Regel räumlich soweit auseinander, dass die aus den Fluoreszenzereignissen entstehenden, beugungsbegrenzt verbreiterten Intensitätsverteilungen der Punktquellenabbilder einander nicht überlappen. Das gilt insbesondere auch für eine Projektion auf ein zweidimensionales Bild, in dem sich die Intensitätsverteilungen aufgrund der Beugungsverbreiterung zwangsläufig über mehrere Bildelemente (engl. "picture elements"; Pixel) erstrecken. In der PAL-Mikroskopie wird eine Vielzahl von Einzelbildern mit einer jeweils geringen Anzahl von in der Regel nichtüberlappenden Fluoreszenzereignissen aufgenommen. Die Aktivierung einer kleinen Gruppe von Fluorophoren wird dabei erst wiederholt, wenn die zuletzt aktivierten Fluorophore ausgebleicht sind. Die Ursprünge der einzelnen Fluoreszenzereignisse werden in den Einzelbildern anhand der beugungsverbreiterten Intensitätsverteilungen mittels einer Ausgleichsrechnung mit Subpixelauflösung lokalisiert und in ein hochauflösendes Ergebnisbild eingetragen.

Es sind weitere Varianten der individuellen Fluorophorenlokalisierung bekannt, die sich in der Vorgehensweise zur Vereinzelung unterscheiden. In der sogenannten STOR-Mikroskopie (engl. "Stochastic Optical Reconstruction Microscopy"; STORM) werden die Fluorophore beispielsweise mittels einer zweiten Lichtquelle in ihren Ausgangszustand zurückgeschaltet (deaktiviert), sobald genügend Photonen in ein Einzelbild aufgenommen wurden. Daneben gibt es noch die Verfahren PALMIRA ("PALM with independently running acquisition"), FPALM ("Fluorescence PALM"), dSTORM ("direct STORM") und GSDIM ("Ground State Depletion and Individual Molecule return").

Die meisten bekannten hochauflösenden Verfahren weisen den Nachteil auf, dass die Ermittlung eines hochaufgelösten Ergebnisbildes aus der Folge von sukzessiv aufgenommenen, normalaufgelösten Einzelbildern extrem rechen- und damit zeitaufwendig ist. Zudem erfolgt die Auswertung der erzeugten Ergebnisbilder in der Regel visuell durch einen menschlichen Betrachter. Durch subjektive Einflüsse kann es dabei zu einer breiten Streuung bei der Ermittlung physikalischer, biologischer oder chemischer Größen kommen.

Neben den hochauflösenden Verfahren ist die sogenannte Fluoreszenz-In-Situ-Hybridisierung (engl. "fluorescence in situ hybridization" bekannt, beispielsweise aus den Veröffentlichungen "FISH Image Analysis" von Castleman et al. in IEEE ENGINEERING IN MEDICINE AND BIOLOGY MAGAZINE, Bd. 15, Nr. 1, S. 67-115, "Automation of fluorescent dot counting in cell nuclei" von Netten et al. in Pattern Recognition, 1994, Bd. 1, S. 84-87, und "Automatic Fluorescent Dot Counting in Interphase Cell Nuclei using Basis Pursuit Image Analysis" von Zhenfei Tai et al. in IEEE Region 5 Conference, 2008, S. 1-4.

Der Erfindung liegt die Aufgabe zugrunde, Verfahren der eingangs genannten Art anzugeben, die eine quantitative Auswertung von mikroskopisch aufgenommenen Bildern mit geringerem Fehler ermöglichen. Dabei soll die quantitative Auswertung insbesondere mit hoher Geschwindigkeit möglich sein.

Die Aufgabe wird gelöst durch ein Verfahren, welches die in Anspruch 1 angegebenen Merkmale aufweist.

Vorteilhafte Ausgestaltungen der Erfindung sind in den Unteransprüchen angegeben.

Die Erfindung ist insbesondere, aber nicht ausschließlich, für den Einsatz mit hochauflösenden Bildgebungsverfahren ausgelegt.

Erfindungsgemäß ist für ein Verfahren zum Auswerten eines Mikroskopbildes, das Intensitätsverteilungen von Fluoreszenzereignissen einer Probe enthält, vorgesehen, dass ein Mikroskopbild ausgewertet wird, bei dem die Intensitätsverteilungen der Fluoreszenzereignisse eine jeweilige beugungsbedingte Ausdehnung aufweisen, die einer Ausdehnung einer Punktübertragungsfunktion des Mikroskops entspricht, und räumlich überlappungsfrei oder zumindest überwiegend räumlich überlappungsfrei angeordnet sind, indem folgende Schritte von einer Steuereinheit ausgeführt werden:
a) Initialisieren mindestens eines Zählers pro als auszuwertend vorgegebener Region des Mikroskopbildes, wobei die auszuwertenden Regionen mit einer Genauigkeit von maximal einem einzelnen Pixel definiert sind,
b) Identifizieren von Fluoreszenzereignissen in einer auszuwertenden Region des Mikroskopbildes, wobei auf eine Ausgleichsrechnung zur subpixelgenauen Lokalisation verzichtet wird,
c) Hochzählen des mit der betreffenden Region korrespondierenden Zählers für jedes in der Region identifizierte Fluoreszenzereignis, und
d) Ausgeben des mindestens einen Zählers als Anzahl oder Konzentration der Fluorophore in der betreffenden Region, wobei vor Schritt b) oder vor Schritt a) das Mikroskopbild mittels eines Mikroskops aufgenommen wird, indem zunächst eine Untermenge der transformierbaren Fluorophore derart in einen anregbaren Zustand transformiert wird, dass die transformierten anregbaren Fluorophore eine geringere Dichte aufweisen als ein Kehrwert eines beugungsbedingt unauflösbaren Volumens angibt und anschließend mittels einer Lichtquelle die Probe zumindest teilweise mit Anregungslicht bestrahlt wird, wobei von der Probe emittierte Fluoreszenzstrahlung mittels eines Mikroskopobjektivs und mittels eines Lichtempfängers beugungsverbreitert abgebildet wird.

Der Kern der Erfindung ist das ortsaufgelöste Zählen einzelner, im auszuwertenden Bild nicht überlappender Fluoreszenzereignisse anstelle der zeitaufwendigen Verrechnung von Fluoreszenzintensitäten zu einem hochauflösenden Ergebnisbild, wodurch sie sich von PALM unterscheidet. Dies kann als Digitalisierung des Mikroskopbildes mit einer durch die Größe der Region(en) definierten räumlichen Auflösung angesehen werden, wobei im Vergleich zu PALM eine signifikant geringere Anzahl von Fluoreszenzereignissen notwendig ist. Diese Operation kann mit hoher Geschwindigkeit durchgeführt werden. So kann auf eine Ausgleichsrechnung zur subpixelgenauen Lokalisation verzichtet werden, wenn die auszuwertenden Regionen mit einer Genauigkeit von maximal einem einzelnen Pixel definiert sind. Für Regionen, die mit einer höheren Genauigkeit definiert und insbesondere kleiner als ein Pixel sind, ist zwar eine subpixelgenaue Lokalisation erforderlich, nicht aber die aufwendige Verrechnung zu einem Ergebnisbild. Es handelt sich vielmehr lediglich um eine Digitalisierung mit einer Werteauflösung von nur einem Bit - die räumliche Auflösung entspricht auch in diesem Fall der Größe der auszuwertenden Region(en) mit anschließender Zählung. Als Ergebnis steht der mindestens eine Zähler pro Region als Skalar mit hoher Genauigkeit für die Anzahl der Fluorophore beziehungsweise der damit markierten Probenmoleküle.

Die Regionen können beispielsweise in Form geometrischer Beschreibungen, beispielsweise in Koordinaten der Pixel des auszuwertenden Bildes, vorgegeben werden und können interessanten Gebieten (engl. "Regions of Interest"; ROI) der Probe entsprechen. Insbesondere können Sie aus einem oder mehreren zusammenhängenden Pixeln eines Bildes der Probe bestehen. Die Vorgabe erfolgt beispielsweise unter Angabe der Koordinaten der in einer betreffenden Region enthaltenen Pixel (Pixelliste) oder der Koordinaten der eine betreffende Region umgebenden Pixel (Grenzpixel). Die Auswahl der Regionen durch den Benutzer kann insbesondere in einem hochauflösenden Ergebnisbild erfolgen (das beispielsweise zuvor aus den Einzelbildern errechnet und angezeigt wird), woraus sich in der Regel Regionsgrenzen ergeben, die mit höherer Genauigkeit als ein Pixel der Einzelbilder definiert sind.

Durch die erfindungsgemäße Einführung des (digitalen) Zählens von Fluoreszenzereignissen oder Molekülen ergibt sich eine dramatische Verbesserung des Signal-zu-Rausch-Verhältnisses. Das für diese Technik eingesetzte binäre Maß (Fluoreszenzereignis/Molekül vorhanden oder nicht) macht das neu entstehende "Bild" deutlich robuster gegen Intensitätsfluktuationen, deren Ursachen vielfältig sein können (Varianz der Poissonverteilung, Unsicherheit der Größe des Detektionsvolumens, Detektorrauschen, photophysikalische Fluorophoreigenschaften, Variationen zwischen verschiedenen Fluorophorsorten, Beleuchtungsinhomogenitäten, Hintergrund- und Autofluoreszenz der Probe). Das (digitale) Zählen trennt scharf die Intensitäts- von der Konzentrationsinformation.

Die Information über die Konzentrationsverteilung (ableitbar aus der Anzahl der Fluoroszenzereignisse/Fluorophore/Moleküle) ist dadurch weitgehend unabhängig von der zwischen verschiedenen Fluorophorsorten bestehenden Variabilität der Fluoreszenz und deren Sensitivität auf lokale chemische Umgebung. Einziges Kriterium ist beispielsweise das Erreichen einer emittierten Photonenzahl, die das Erreichen einer (zu bestimmenden) Schwelle und damit Registrierung als Fluoreszenzereignis und/oder Molekül erlaubt.

Überstreicht die Konzentrationsverteilung eines Fluorophors viele Größenordnungen ist es aufgrund des beschränkten Dynamikbereichs realer Photodetektoren schwierig, sehr dunkle Strukturen gleichzeitig mit sehr hellen abzubilden. Durch das hier beschriebene Verfahren werden die Moleküle nacheinander abgebildet und gezählt. Der Dynamikbereich der Konzentrationsverteilung ist damit unabhängig vom Dynamikbereich des Detektionssystems, der dadurch extrem empfindlich für die Detektion von Einzelmolekülen gewählt werden kann. So haben typischerweise EMCCD-Kameras bei voller Verstärkung einen Dynamikbereich von weniger als 1000. Die erfindungsgemäß gewonnenen Zähler haben bei gleichem Dynamikbereich des Detektionssystems einen signifikant höheren Dynamikbereich. Damit ergibt sich auch eine Erhöhung der Empfindlichkeit der Methode gegenüber integrierenden Fluoreszenzintensitätsmessungen. Sogar gegenüber PALM ermöglicht die Erfindung eine höhere Dynamik in Teilen der Probe, in denen die Fluorophordichte sehr hoch ist. In hochauflösenden PALM-Ergebnisbildern können derartig hohe Dichten nicht aufgelöst werden, so dass eine quantitative Auswertung ausgeschlossen ist.

Erfindungsgemäß wird der mindestens eine Zähler als Anzahl oder Konzentration von Fluorophoren der betreffenden Region ausgegeben. Optional wird anhand von mindestens zwei Zählern ein Falschfarbenbild ausgegeben. Bei mehreren Regionen entsteht ein Bild, das die lokale Anzahl oder Konzentration von Molekülen, Fluorophoren oder Ereignissen in der Probe quantitativ beschreibt. Die Werte der erfindungsgemäßen Zähler können beispielweise zur Beschreibung quantitativer Modelle in biologische Systemen verwendet werden, insbesondere in der Systembiologie, oder in allen anderen Anwendungen, in denen quantitative Daten mikroskopisch ermittelt werden müssen. Die hohe Dynamik des erfindungsgemäßen Verfahrens kann auch zur Bildgebung verwendet werden, indem die lokal ermittelten Anzahlen oder Konzentrationen mit vorzugebender Pixelgröße in ein Falschfarbenbild konvertiert werden. Ein solches Falschfarbenbild kann theoretisch einen beliebig großen Dynamikbereich erfassen, der nur noch von der Probe und nicht mehr vom Detektionssystem limitiert wird.

Die Erfindung setzt für das auszuwertende Mikroskopbild voraus, dass die Fluoreszenz lediglich einer stochastischen, ausreichend kleinen Untermenge aller in der Probe enthaltenen Fluorophore einer Sorte transformiert wird. Das gelingt beispielsweise, wenn die Probe mit mindestens einer Sorte von transformierbaren Fluorophoren markiert ist, indem vor Schritt b), insbesondere vor Schritt a), das Mikroskopbild mittels eines Mikroskops aufgenommen wird, indem zunächst eine Untermenge der transformierbaren Fluorophore derart in einen anregbaren Zustand transformiert (beispielsweise mit Licht einer Aktivierungswellenlänge bestrahlt) wird, dass die transformierten, anregbaren Fluorophore eine geringere Dichte aufweisen als ein Kehrwert eines beugungsbedingt unauflösbaren Volumens angibt (mit anderen Worten, dass zwischen den transformierten, anregbaren Fluorophoren Abstände resultieren, die überwiegend größer als eine Ausdehnung einer Punktübertragungsfunktion des Mikroskops sind) und anschließend mittels einer Lichtquelle die Probe zumindest teilweise mit Anregungslicht bestrahlt wird, wobei von der Probe emittierte Fluoreszenzstrahlung mittels eines Mikroskopobjektivs und mittels eines Lichtempfängers beugungsverbreitert abgebildet wird. Das Transformieren kann chemisch oder optisch erfolgen. Das optische Schaltverfahren wird beispielsweise in der PAL-Mikroskopie verwendet. Nach der Aufnahme des Mikroskopbilds (oder weiterer Mikroskopbilder) können die aktivierten Fluorophore deaktiviert (also in einen nicht anregbaren Zustand transformiert) werden, beispielsweise durch Bleichen. In einem weiteren Aufnahmezyklus kann dann erneut eine (stochastische) Untermenge der transformierbaren Fluorophore mit einer ausreichend geringen Dichte aktiviert und angeregt werden.

Vorteilhafterweise kann zusätzlich eine korrelationsspektroskopische Messung und/oder eine Resonanzenergietransfermessung nach Förster (engl. "Förster Resonant Energy Transfer"; FRET) an der Probe durchgeführt werden. Die Schritte b) und c) können auch mit weiteren fluoreszenzspektroskopischen Methoden kombiniert werden, die zur Messung von Einzelmoleküleigenschaften geeignet sind. In Kombination mit Fluoreszenzkorrelationsspektroskopie (engl. "Fluorescence Correlation Spectroscopy"; FCS) oder Rasterbildkorrelationsspektroskopie (engl. "Raster Image Correlation Spectroscopy"; RICS) lassen sich über die Diffusionskonstanten unterschiedliche Systeme (beispielsweise Proteine), an denen die Fluorophore gebunden sind, identifizieren oder die Bindung verifizieren. Bei Anpassen der Parameter für Transformation, Anregung und Detektion (Reduzieren der Leistung bei Transformation und/oder Anregung; Erhöhung des Schwellwert "An-Zeit" bei Detektion) kann in Kombination mit FCS/RICS zwischen gebundenen und frei in der Zelle diffundierenden Objekten unterschieden werden und die jeweilige Konzentration kann bestimmt werden. Damit können lokale Bindungsgleichgewichte ermittelt werden.

Vorzugsweise wird in Fällen, in denen die Fluoreszenzereignisse von unterschiedlichen Fluorophorsorten stammen, pro auszuwertender Region in Schritt a) für jede als auszuwertend vorgegebene Fluorophorsorte ein jeweiliger Zähler initialisiert und in Schritt b) zusätzlich identifiziert, dass das Fluoreszenzereignis einer auszuwertenden Fluorophorsorte entspricht, und in Schritt c) der mit der betreffenden Region und der betreffenden Fluorophorsorte korrespondierende Zähler hochgezählt. Dies ermöglicht den direkten Vergleich der Anzahlen und/oder Konzentrationen unterschiedlicher Fluorophore.

In bevorzugten Ausgestaltungen werden (für mindestens zwei auszuwertende Regionen und/oder für mindestens zwei auszuwertende Fluorophorsorten) mindestens zwei Zähler verwendet und ein Quotient zwischen den Zählern gebildet und als stöchiometrische Beziehung (zwischen zwei verschiedenen Regionen für dieselbe Fluorophorsorte oder zwischen zwei verschiedenen Fluorophorsorten in derselben Probenregion oder zwischen zwei verschiedenen Fluorophorsorten in zwei verschiedenen Probenregionen) ausgegeben. Insbesondere in Verbindung mit einer manuellen Auswahl von Regionen in einem hochauflösenden Ergebnisbild vorab, sei es mittels PALM, SIM/SPEM oder anderen Hochauflösungsverfahren, ermöglicht dies stöchiometrische Messungen wie beispielsweise die Analyse der Zusammensetzung von Proteinkomplexen. Durch die bei PALM auftretenden geringen Anzahlen von Molekülen macht sich die Verbesserung des Signal-zu-Rausch-Verhältnisses vorteilhaft bemerkbar. Insbesondere bei lokalen stöchiometrischen Messungen mit mehreren Spezies wird die quantitative Bestimmung relativer und absoluter Konzentrationen mittels FluoreszenzIntensitätsmessungen durch die für die verschiedenen Wellenlängen unterschiedlichen und meist nicht genau bekannten Transferfunktionen des optischen Systems (Filtereffizienzen, chromatische Effekte usw.) erschwert. Das erfindungsgemäße Verfahren umgeht diese Problematik wiederum durch den Diskriminierungsvorgang des Zählens. Die auszuwertenden Regionen können beispielsweise als Stöxel oder Stoixel bezeichnet werden (Stöchiometrie-Elemente).

Generell können vorteilhafterweise (z. B. bei für beide Zähler identischer Fluorophorsorte) ein erster Zähler für eine erste Region und ein zweiter Zähler für eine zweite, von der ersten verschiedene Region verwendet wird oder (z. B. bei für beide Zähler identischer Region) ein erster Zähler für eine erste Fluorophorsorte und ein zweiter Zähler für eine zweite, von der ersten verschiedene Fluorophorsorte verwendet werden. Dies ermöglicht den quantitativen Vergleich zweier Regionen oder Fluorophorsorten mit hoher Genauigkeit.

In Kombination mit FRET können über die Beobachtung der FRET-Kanäle zusätzlich zur Stöchiometrie zweier oder mehrerer Spezies (markiert durch unterschiedliche Fluorophorsorten) auch einzelne chemische Bindungsereignisse zwischen diesen Spezies beobachtet, gezählt und mit hoher Genauigkeit lokalisiert werden.

In einer vorteilhaften Ausführungsform wird zum Transformieren in den anregbaren Zustand ein Laser-Scanning-Mikroskop verwendet. Dadurch kann lokal, beispielsweise ROI-selektiv, aktiviert, also in den anregbaren Zustand transformiert werden und über die ermittelte Zählrate in Art einer Rückkopplung fortgefahren werden bis anhand der Rückkopplung ein stabiles stöchiometrisches Ergebnis ermittelt wird.

Vorzugsweise werden zur Auswertung einer zeitlichen Reihe von Mikroskopbildern, die Intensitätsverteilungen von Fluoreszenzereignissen der Probe enthalten, wobei die Intensitätsverteilungen beugungsbedingt eine jeweilige Ausdehnung aufweisen, die einer Ausdehnung einer Punktübertragungsfunktion des Mikroskops entspricht, und jeweils innerhalb der Mikroskopbilder überwiegend oder zumindest überwiegend überlappungsfrei angeordnet sind, die Schritte b) und c) für jedes Mikroskopbild wiederholt. Dabei wird die Emission eines Fluorophors, das über mehrere aufeinanderfolgende Mikroskopbilder hinweg an derselben Stelle strahlt, entweder anhand des erstmaligen Auftretens der Strahlung an der betreffenden Stelle, mithin an der positiven Flanke des Fluoreszenzintensitätssignals, oder nach dem Ende der Strahlung an der betreffenden Stelle, mithin an der negativen Flanke des Fluoreszenzintensitätssignals, als ein einzelnes Fluoreszenzereignis identifiziert. Das Hochzählen erfolgt also nur in dem einen Mikroskopbild, in dem die Identifikation erfolgt (entweder an der positiven Fluoreszenzflanke oder an der negativen). Durch die Auswertung mehrerer aufeinanderfolgender Mikroskopbilder wird die untersuchte Stichprobe größer, so dass die Genauigkeit der quantitativen Auswertung verbessert wird.

In einer vorteilhaften Ausgestaltung des Verfahrens kann jeweils nach Auswertung einer vorgegebenen Anzahl von Mikroskopbildern ein Stand eines Zählers protokolliert und der Zähler initialisiert werden. Das gilt insbesondere für alle Zähler. Eine solche Ausgestaltung ermöglicht die zeitaufgelöste quantitative Auswertung mit hoher Genauigkeit. So kann die zeitliche Veränderung lokaler Konzentrationsverhältnisse ortsaufgelöst gemessen und dargestellt werden.

Die Identifikation in Schritt b) gelingt mit hoher Geschwindigkeit, indem für mindestens ein Bildelement lediglich identifiziert wird, dass ein vorgegebener Intensitätsschwellwert überschritten ist. Als Ort des Fluoreszenzereignisses wird beispielsweise der Mittelpunkt oder eine Ecke des betreffenden Bildelementes verwendet.

Bei Verwendung reversibel schaltender Fluorophore ist die Stöchiometrie limitiert, da im Grenzfall nicht eindeutig entschieden werden kann, ob dasselbe Molekül nach Aus- und Einschalten erneut gezählt wird oder ob es sich um ein anderes Molekül in unmittelbarer Nähe handelt. Konvertierbare Fluorophore schalten in der Regel zwischen Fluoreszenzzuständen mit unterschiedlichen Emissionswellenlängen. Vorzugsweise wird im Falle einer umschaltbar zweifarbig fluoreszierenden Fluorophorsorte in Schritt c) das Hochzählen nur dann durchgeführt, wenn in einer zeitlichen Reihe von Mikroskopbildern an demselben Ort in aufeinanderfolgenden Mikroskopbildern abwechselnd beide Fluoreszenzfarben identifiziert werden. Durch simultane Detektion beider Wellenlängen und erfindungsgemäßer Identifikation mit Zählung wie oben lassen sich reversibel schaltende von final bleichenden Fluorophoren unterscheiden: wenn der An/Aus-Vorgang in beiden Kanälen korreliert, handelt es sich um dasselbe Molekül. Alternativ oder zusätzlich können verschiedene Exemplare einer reversibel schaltenden Fluorophorsorte anhand einer vorgegebenen minimalen Ortsabweichung identifiziert werden.

Bei der Stöchiometrie mit mehreren Spezies ergibt sich eine weitere Schwierigkeit durch ein möglicherweise anderes, reversibles Schaltverhalten der unterschiedlichen Fluorophore. Dies kann durch gezieltes Ausschalten der Reversibilität mittels Bleichen oder auf chemischen Weg erfolgen (Heilemann et al., Angew. Chem. Int. Ed. 2008, 47, 6172, und dort zitierte Referenzen). Das gilt selbstverständlich auch für Proben mit nur einer Fluorophorsorte.

Nachfolgend wird die Erfindung anhand von Ausführungsbeispielen näher erläutert.

In den Zeichnungen zeigen:
Fig. 1 schematisch ein Mikroskop zur Aufnahme und quantitativen Auswertung von Mikroskopbildern,
Fig. 2 ein Flussdiagramm eines Verfahrens zur quantitativen Auswertung von Mikroskopbildern, insbesondere mit Aufnahme solcher Bilder,
Fig. 3 beispielhafte Ergebnisse einer quantitativen Auswertung für mehrere Probenregionen in schematischer Darstellung,
Fig. 4 beispielhafte Ergebnisse einer quantitativen Auswertung für nur eine Probenregion in schematischer Darstellung und
Fig. 5 eine schematische Darstellung einer quantitativen Auswertung mit zeitlicher Auflösung.

In allen Zeichnungen tragen übereinstimmende Teile gleiche Bezugszeichen.

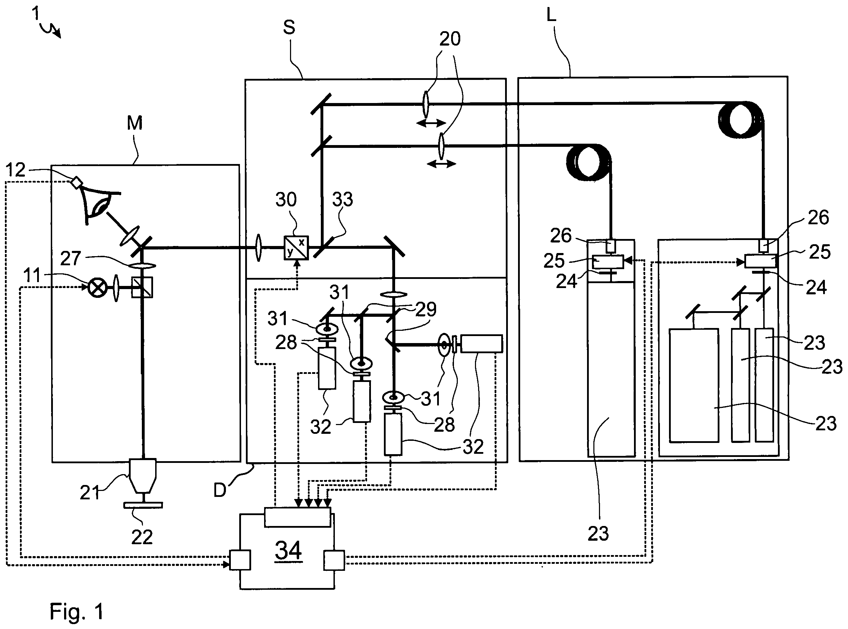

In **Fig. 1** ist ein Mikroskop 1, dessen Steuereinheit 34 zur Durchführung des erfindungsgemäßen Verfahrens eingerichtet ist, schematisch dargestellt. Das Mikroskop 1 ist neben einer Lichtquelle 11 und einer Kamera 12 jeweils zur Weitfeldbeleuchtung und -aufnahme zweidimensionaler Bilder auch als Laser-Scanning-Mikroskop (LSM) ausgerüstet. Das LSM ist modular aus einem Beleuchtungsmodul L mit Lasern 23, einem Abtastmodul S (engl. "scanning module"), einem Detektionsmodul D und der Mikroskopeinheit M mit dem Mikroskopobjektiv 31 zusammengesetzt. Das Licht der Laser 23 kann durch Lichtklappen 24 und Abschwächer 25 von der Steuereinheit 34 beeinflusst werden, bevor es über Lichtleitfasern und Koppeloptiken 20 in die Abtasteinheit S eingespeist und vereinigt wird. Über den Hauptstrahlteiler 33 und die X-Y-Abtasteinheit 30 (engl. "scanner"), die zwei Galvanometerspiegel aufweist (nicht dargestellt), gelangt es durch das Mikroskopobjektiv 21 zur Probe 22, wo es ein Fokusvolumen (nicht abgebildet) beleuchtet. Von der Probe reflektiertes Licht oder emittiertes Fluoreszenzlicht gelangt durch das Mikroskopobjektiv 21 zur Kamera 12 oder über die Abtasteinheit 30 durch den Hauptstrahlteiler 30 in das Detektionsmodul D. Der Hauptstrahlteiler 30 kann beispielsweise als dichroitischer Farbteiler ausgebildet sein. Das Detektionsmodul D weist mehrere Detektionskanäle mit jeweils einer Lochblende 31, einem Filter 28 und einem Photovervielfacher 32 auf, die durch Farbteiler 29 separiert sind. Anstelle von Lochblenden 31 können, beispielsweise bei linienförmiger Beleuchtung, auch Schlitzblenden (nicht abgebildet) verwendet werden. Die konfokalen Lochblenden 31 dienen der Diskriminierung von Probenlicht, das nicht aus dem Fokusvolumen stammt. Die Photovervielfacher 32 detektieren daher ausschließlich Licht aus dem Fokusvolumen. Das konfokal beleuchtete und aufgenommene Fokusvolumen der Probe 22 kann mittels der Abtasteinheit 30 über die Probe 22 bewegt werden, um pixelweise ein Bild aufzunehmen, indem die Galvanometerspiegel der Abtasteinheit 30 gezielt verdreht werden. Sowohl die Bewegung der Galvanometerspiegel als auch das Schalten der Beleuchtung mittels der Lichtklappen 24 oder der Abschwächer 25 werden unmittelbar von der Steuereinheit 34 gesteuert. Die Datenaufnahme von den Photovervielfachern 32 erfolgt ebenfalls über die Peripherieschnittstelle 4. Die Bildaufnahme mittels Lichtquelle 11 und Kamera 12 ist unabhängig von der Einstellung der Abtasteinheit 30. Die Lichtquelle 11 kann aus zwei von der Steuereinheit 34 schaltbaren Teillichtquellen bestehen, eine erste Teillichtquelle zur Aktivierung (Transformation in einen anregbaren Zustand) von Fluorophoren mit einer Aktivierungswellenlänge und zweite Teillichtquelle zur Anregung dieser Fluorophoren zur Fluoreszenz.

Zur Realisierung der Erfindung (Auswertung von existierenden Mikroskopbildern) ist nur eine Auswerteeinheit zwingend notwendig, beispielsweise in Form der abgebildeten Steuereinheit 34. Sofern die Mikroskopbilder zuvor auch aufzunehmen sind, ist zudem die Mikroskopeinheit M mit der Lichtquelle 11 (oder mehreren Lichtquellen) und der Kamera 12 sowie eine Steuereinheit 34 notwendig. Die LSM-Komponenten L, S und D sind nicht notwendig, können aber beispielsweise für eine Aktivierung und Anregung in einzelnen Probenbereichen wie den Regionen R1, R2 vorteilhaft sein. Entsprechend kann die Steuereinheit 34 vereinfacht aufgebaut sein, beispielsweise ohne Schnittstellen für solche Komponenten. Beispielsweise kann die Auswerteeinheit/Steuereinheit 34 ein handelsüblicher elektronischer Rechner (engl. "computer") sein.

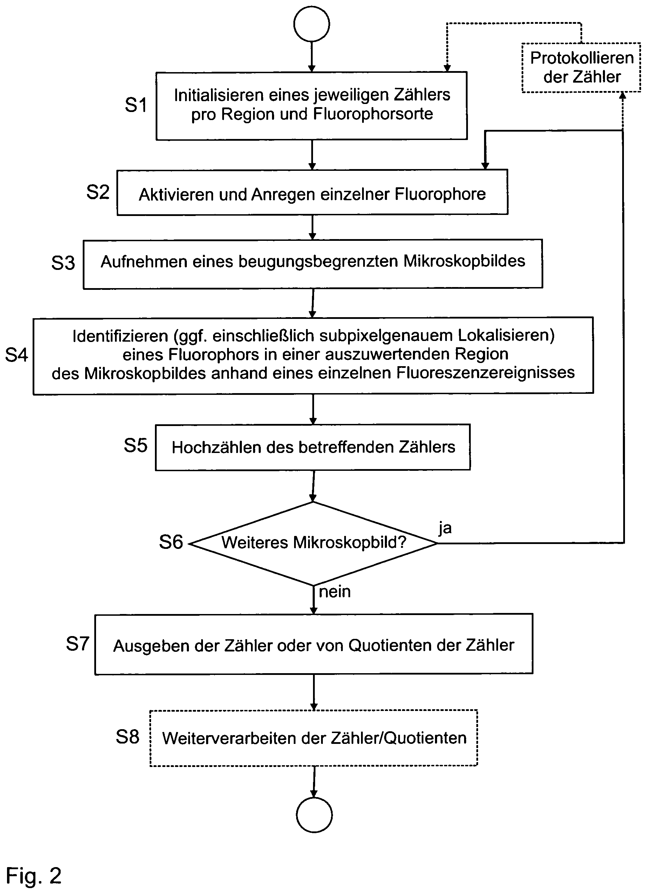

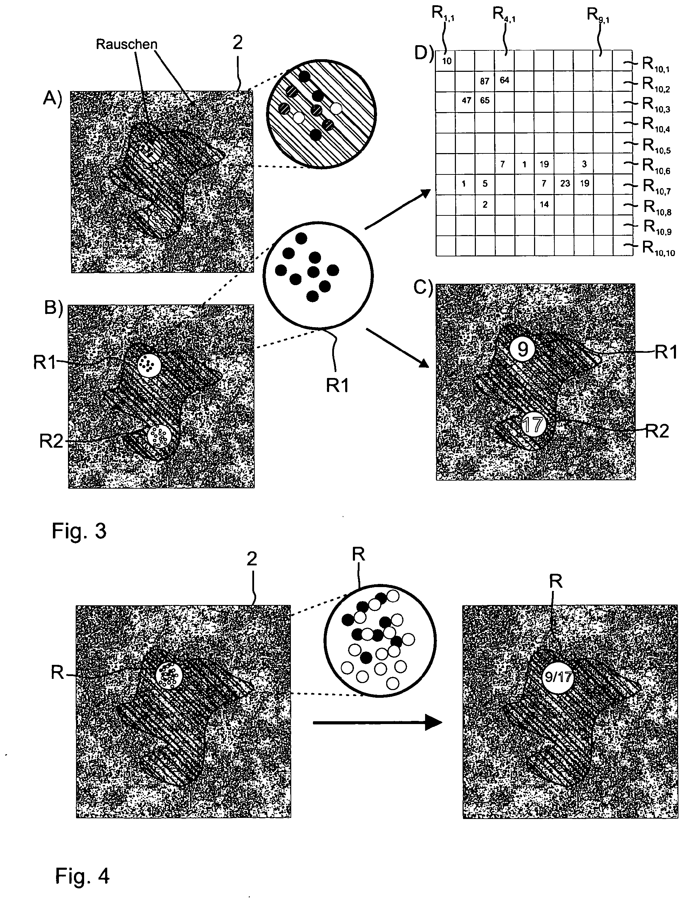

**Fig. 2** zeigt ein Flussdiagramm eines beispielhaften, von der Steuereinheit 34 ausgeführten erfindungsgemäßen Verfahrens, bei dem die quantitative Auswertung eines oder mehrerer Mikroskopbilder unmittelbar nach der Aufnahme erfolgt. Vorausgesetzt wird, dass eine auszuwertende Probe 22, die mit beispielsweise genau einer Fluorophorsorte markiert ist, unter dem Objektiv 21 angeordnet ist, und dass beispielsweise zwei Regionen R1, R2 (siehe Fig. 3) der Probe 22 als auszuwertend vorgegeben sind. In anderen Ausführungsformen können mehr als eine Fluorophorsorte und nur eine oder drei oder mehr Regionen ausgewertet werden. Die hier rein beispielhaft kreisscheibenförmigen Regionen R1, R2 können beispielsweise in Form ihres jeweiligen Mittelpunkts und ihres Radius vorgegeben werden. Zunächst wird in Schritt S1 ein jeweiliger Zähler pro auszuwertende Region R1, R2, insgesamt also zwei Zähler, mit Null initialisiert.

Zur Aufnahme eines Mikroskopbildes mit ausreichend geringer Dichte von Fluoreszenzereignissen wird in Schritt S2 zunächst eine nur geringe Zahl von Fluorophoren mittels der Lichtquelle 11 oder, ortsabhängig, mittels eines der Laser 23 durch einen schwachen Lichtblitz mit einer Aktivierungswellenlänge in ihren anregbaren Zustand transformiert. Die Auswahl der Untermenge der tatsächlich aktivierten Fluorophore aus der Gesamtmenge aller im jeweiligen Beleuchtungsfeld liegenden Fluorophore geschieht dabei rein stochastisch. Die Dichte der aktivierten Fluorophore ist dabei "ausreichend gering", wenn sie kleiner ist als ein Kehrwert eines beugungsbedingt von dem Objektiv 21 unauflösbaren Volumens. In der Folge haben die aktivierten Fluorophore voneinander Abstände, die überwiegend größer als eine Ausdehnung der PSF des Mikroskopobjektivs sind. Mittels einer von der Aktivierungswellenlänge verschiedenen Anregungswellenlänge werden die derart transformierten Fluorophore anschließend angeregt. Dies kann wiederum mit der Lichtquelle 11 oder, ortsabhängig, mit einem der Laser 23 erfolgen.

Die daraufhin von den angeregten Fluorophoren emittierte Fluoreszenzstrahlung wird in Schritt S3 mittels der Kamera 12 in ein zweidimensionales Mikroskopbild aufgenommen, das vorzugsweise vor der quantitativen Auswertung gespeichert wird. Aufgrund der Beugung des einfallenden Lichts im Mikroskopobjektiv 21 wird jedes Fluoreszenzereignis mit einer Intensitätsverteilung in das betreffende Mikroskopbild abgebildet, deren Ausdehnung der Ausdehnung der Punktübertragungsfunktion des Mikroskopobjektivs 21 entspricht, also in der zweidimensionalen Projektion etwa dem Durchmesser einer Airy-Scheibe. Wegen der Abstände der aktivierten Fluorophore (überwiegend größer als eine Ausdehnung der PSF des Mikroskopobjektivs) sind die Intensitätsverteilungen der Fluoreszenzereignisse im Mikroskopbild überlappungsfrei.

In Schritt S4 werden die einzelnen Fluoreszenzereignisse im Mikroskopbild identifiziert. Zu diesem Zweck wird das Mikroskopbild beispielsweise zunächst in bekannter Weise mittels eines Gauss-Filters und anschließend mittels eines Laplace-Filters verarbeitet. Diese Filter können beispielsweise als Blockoperatoren (Operatormatrizen) realisiert werden, die pixelweise über das Mikroskopbild geführt werden. Ein Blockoperator bezieht zur Ermittlung einer Intensität eines gefilterten Pixels auch die Intensitäten der umliegenden Pixel ein, also beispielsweise einen Block von 5x5 Pixeln für den Gauss-Filter und insgesamt einen Block von 3x3 Pixeln für den Laplace-Filter. Der Gauss-Filter entfernt Schrotrauschen, der Laplace-Filter entfernt große zusammenhängende Gebiete. Für die Identifikation wird im allgemeinen Fall nur die Existenz eines Fluoreszenzereignisses in einer Region ermittelt, nicht notwendigerweise auch der Ort innerhalb der Region. Dies gelingt beispielsweise durch sektorweises Suchen nach einem Pixel oder einer Pixelgruppe mit einem Intensitätswert, der größer als ein vorgegebener Identifikationsschwellwert ist. Beispielsweise wird die Existenz eines Fluoreszenzereignisses in einem Pixel erkannt, wenn der aufgenommene Intensitätswert des betreffenden Pixels größer als ein Äquivalent von 50 Photonen ist.

Nur, wenn die auszuwertende Region mit höherer Genauigkeit definiert ist als es der Größe eines Pixels des Mikroskopbildes entspricht, wird nach Ermittlung der Existenz eines Fluoreszenzereignisses ein jeweiliger Schwerpunkt der Intensitätsverteilung jedes Fluoreszenzereignisses als Ort des betreffenden Fluoreszenzereignisses subpixelgenau ermittelt (lokalisiert), indem eine Modellfunktion, beispielsweise eine Normalverteilung, der PSF mittels einer Ausgleichsrechnung an die jeweilige Intensitätsverteilung angepasst wird. Sofern die auszuwertende Region lediglich mit einer Genauigkeit entsprechend der Größe eines Pixels des Mikroskopbilds oder gröber definiert ist, ist eine Lokalisierung nicht erforderlich. Die Identifikation kann also in Abhängigkeit der Auflösung der quantitativen Auswertung einstufig (nur Existenzermittlung) oder zweistufig (Existenzermittlung und Lokalisierung) sein. Für jede auszuwertende Region wird geprüft, welche der identifizierten Fluoreszenzereignisse in der betreffenden Region liegen. Alternativ kann die Identifikation derart erfolgen, dass von vornherein nur in den auszuwertenden Regionen nach existierenden Fluoreszenzereignissen gesucht wird. Beispielsweise werden als Ergebnis der Identifikation in Region R1 neun Fluoreszenzereignisse und in Region R2 siebzehn Fluoreszenzereignisse ermittelt.

In Schritt S5 wird dementsprechend der Zähler für Region R1 neunmal und der Zähler für Region R2 siebzehnmal inkrementiert, beispielsweise unmittelbar nach der Identifikation. Typischerweise können die Zähler jede natürliche Zahl annehmen und werden beim Inkrementieren jeweils um die natürliche Zahl eins hochgezählt. Selbstverständlich kann für die Zähler jede andere Zahlenmenge und ein spezielles 1-Element zum Hochzählen verwendet werden.

Nach Abschluss der Auswertung eines Mikroskopbilds wird in Schritt S6 geprüft, ob weitere Mikroskopbilder aufgenommen werden sollen. Falls ja, wird das Verfahren mit Schritt S2 fortgesetzt, anderenfalls mit Schritt S7. Die Zähler werden dabei nicht wieder initialisiert, um weitere Fluoreszenzereignisse akkumulieren zu können. In alternativen Ausführungsformen (angedeutet durch unterbrochene Linien) können die momentanen Zählerstände protokolliert (gespeichert) und die Zähler initialisiert werden, so dass sich die Zählerstände beliebiger Teilfolgen (durch Zusammenfassen einer entsprechenden Teilfolgen von Zählerständen) oder der gesamten Bildfolge im Nachhinein mit geringem Rechenaufwand rekonstruieren lassen. Optional können vor dem erneuten Aktivieren einer Untermenge von Fluorophoren die bisher aktivierten Fluorophore deaktiviert werden, beispielsweise durch Photobleichen oder chemisches Bleichen.

In Schritt S7 werden die Zählerstände oder, sofern vorhanden, die Protokolle der Zählerstände ausgegeben, beispielsweise über eine digitale oder eine analoge Schnittstelle. Im vorliegenden Fall wird zudem der Quotient der Zählerstände für die Region R1 und für die Region R2 berechnet (9/17) und ausgegeben. Falls die Zählerstände im Laufe einer Reihenbildaufnahme protokolliert werden, kann beispielsweise für jeden Protokolleintrag, also jedes einzelne Mikroskopbild, ein Quotient berechnet und ausgegeben werden. Die Zählerstände können vor der Ausgabe beispielsweise anhand der Fläche oder des Volumens der jeweiligen Region in Konzentrationsangaben umgerechnet werden.

Im optionalen Schritt S8 können die ausgegebenen Zählerstände weiterverarbeitet werden. Beispielsweise kann bei einer genügend hohen Anzahl von ausgewerteten Regionen ein Falschfarbenbild mit prinzipiell beliebig großem Dynamikumfang erzeugt und ausgegeben werden. Dabei wird jeweils einem Intervall von Zählerständen eine Falschfarbe zugeordnet und jede Region mit der betreffenden Falschfarbe gemäß einem für sie ermittelten Zählerstand ausgefüllt werden.

Das Verfahren kann auch auf bereits früher gemäß den Schritten S2/S3 (S6) aufgenommene Mikroskopbilder angewendet werden, wobei die Schritte S2 und S3 bei der Auswertung entfallen.

**Fig. 3** zeigt ein Beispiel eines Ergebnisses einer quantitativen Auswertung gemäß dem oben beschriebenen Verfahren. In Teilbild A) sind die Regionen R1 und R2 mit verrauschten Fluoreszenzsignalen im rohen Mikroskopbild und in einem vergrößerten Ausschnitt angedeutet. In Teilbild B) sind die nach einer Filterung des Mikroskopbilds in den Regionen R1 und R2 identifizierten einzelnen Fluoreszenzereignisse im rohen Mikroskopbild und in einem vergrößerten Ausschnitt angedeutet. In Teilbild C) sind die resultierenden Zählerstände in den Regionen dargestellt. Die Erfindung ermöglicht so beispielsweise die Bestimmung der lokalen Stöchiometrie zwischen vorgegebenen Regionen und/oder innerhalb vorgegebener Regionen. In Teilbild D) ist angegeben, wie sich Zählerstände für eine andere Probe mit feinerer Auflösung der Regionen ergeben können. Die beispielhaften hundert quadratischen Regionen R_{1,1} bis R_{10,10} grenzen unmittelbar aneinander. Die Erfindung ermöglicht so gewissermaßen die Ermittlung der lokalen Konzentration eines Fluorophors als Bild mit hohem Kontrast.

In **Fig. 4** ist ein beispielhaftes Ergebnis für einen Fall dargestellt, in dem nur eine einzige Probenregion R auszuwerten war, die mit zwei verschiedenen Fluorophorsorten markiert war. Für die Region R wurde für jede Fluorophorsorte ein separater Zähler, insgesamt also zwei Zähler, verwendet. Entsprechend können werden für die Region R zwei Zählerstände und/oder ein Quotient (9/17) ausgegeben werden. Die Erfindung ermöglicht so beispielsweise die Bestimmung der lokalen Stöchiometrie auch innerhalb einer vorgegebenen Region.

Die Anzahl zu verwendenden Zähler ergibt sich allgemein als das Produkt aus der Anzahl der auszuwertenden Regionen und der Anzahl der auszuwertenden Fluorophorsorten.

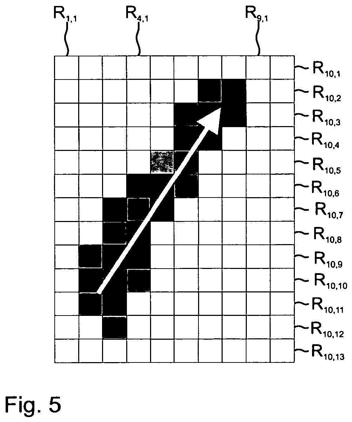

**Fig. 5** deutet die Ermittlung eines zeitlichen Verlaufs quantitativer Daten an, beispielsweise mittels Protokollierung der Zählerstände zwischen einzelnen Mikroskopbildern. Die Zeitauflösung kann dabei durch Zusammenfassen einzelner Teilfolgen von protokollierten Zählerständen im Nachhinein verringert werden. Zweckmäßigerweise bleibt die ursprüngliche Zählerfolge dabei unverändert erhalten, um dem Benutzer eine flexible variable Einstellung der zeitlichen Auflösung der quantitativen Auswertung zu ermöglichen.

In allen Ausführungsformen kann die räumliche Auflösung durch Zusammenfassen von Regionen (Addieren der betreffenden Zählerstände) verringert werden. Zweckmäßigerweise bleiben die Zählerstände der höchsten aufgelösten ursprünglichen Regionen dabei unverändert erhalten, um dem Benutzer eine flexible variable Einstellung der räumlichen Auflösung der quantitativen Auswertung zu ermöglichen.

### Bezuqszeichenliste

- 1: Mikroskop
- 2: Mikroskopbild
- 11: Lichtquelle
- 12: Kamera
- 20: Kollimationsoptik
- 21: Mikroskopobjektiv
- 22: Probe
- 23: Laser
- 24: Lichtklappe
- 25: Abschwächer
- 26: Faserkoppler
- 27: Tubuslinse
- 28: Filter
- 29: Dichroitischer Strahlteiler
- 30: Scannerspiegel
- 31: Lochblende
- 32: Photovervielfacher
- 33: Hauptstrahlteiler
- 34: Steuereinheit
- D: Detektionsmodul
- M: Mikroskop
- L: Beleuchtungsmodul
- S: Abtastmodul
- _{R(m,n)}: Probenregion

## Patentansprüche

1. Verfahren zum Aufnehmen und Auswerten eines Mikroskopbildes (2), das Intensitätsverteilungen von Fluoreszenzereignissen einer Probe (22) enthält, die mit transformierbaren Fluorophoren markiert ist, wobei die Intensitätsverteilungen eine jeweilige beugungsbedingte Ausdehnung aufweisen, die einer Ausdehnung einer Punktübertragungsfunktion des Mikroskops (1) entspricht, und überlappungsfrei angeordnet sind, umfassend folgende Schritte, die von einer Steuereinheit (34) ausgeführt werden:
a) Initialisieren mindestens eines Zählers pro vorgegebener auszuwertender Region (R, R1, R2) des Mikroskopbildes (2), wobei die auszuwertenden Regionen mit einer Genauigkeit von maximal einem einzelnen Pixel definiert sind,
b) Identifizieren von Fluoreszenzereignissen in einer auszuwertenden Region (R, R1, R2) des Mikroskopbildes (2), wobei auf eine Ausgleichsrechnung zur subpixelgenauen Lokalisation verzichtet wird,
c) Hochzählen des mit der betreffenden Region (R, R1, R2) korrespondierenden Zählers für jedes in der Region (R, R1, R2) identifizierte Fluoreszenzereignis, und
d) Ausgeben des mindestens einen Zählers als Anzahl oder Konzentration der Fluorophore, in der betreffenden Region (R, R1, R2),
wobei vor Schritt b) oder vor Schritt a) das Mikroskopbild (2) mittels eines Mikroskops (1) aufgenommen wird, indem zunächst eine Untermenge der transformierbaren Fluorophore derart in einen anregbaren Zustand transformiert wird, dass die transformierten anregbaren Fluorophore eine geringere Dichte aufweisen als ein Kehrwert eines beugungsbedingt unauflösbaren Volumens angibt und anschließend mittels einer Lichtquelle (11, 23) die Probe (22) zumindest teilweise mit Anregungslicht bestrahlt wird, wobei von der Probe (22) emittierte Fluoreszenzstrahlung mittels eines Mikroskopobjektivs (21) und mittels eines Lichtempfängers (12, 28) beugungsverbreitert abgebildet wird.

2. Verfahren nach Anspruch 1, wobei anhand mindestens zwei Zählern ein Falschfarbenbild ausgegeben wird.

3. Verfahren nach Anspruch 1 oder 2, wobei mindestens zwei Zähler verwendet werden und ein Quotient zwischen den Zählern gebildet und als stöchiometrische Beziehung ausgegeben wird.

4. Verfahren nach einem der vorhergehenden Ansprüche, wobei die Fluoreszenzereignisse von unterschiedlichen Fluorophorsorten stammen und pro auszuwertender Region (R, R1, R2) in Schritt a) für jede als auszuwertend vorgegebene Fluorophorsorte ein jeweiliger Zähler initialisiert wird und in Schritt b) zusätzlich identifiziert wird, dass das Fluoreszenzereignis einer auszuwertenden Fluorophorsorte entspricht, und in Schritt c) der mit der betreffenden Region (R, R1, R2) und der betreffenden Fluorophorsorte korrespondierende Zähler hochgezählt wird.

5. Verfahren nach einem der vorhergehenden Ansprüche, wobei ein erster Zähler für eine erste Region (R1) und ein zweiter Zähler für eine zweite, von der ersten verschiedene Region (R2) verwendet werden.

6. Verfahren nach einem der vorhergehenden Ansprüche, wobei zusätzlich eine korrelationsspektroskopische Messung oder eine Resonanzenergietransfermessung nach Förster an der Probe (22) durchgeführt wird.

7. Verfahren nach einem der vorhergehenden Ansprüche, wobei zum Transformieren in den anregbaren Zustand ein Laser-Scanning-Mikroskop verwendet wird.

8. Verfahren nach einem der vorhergehenden Ansprüche, wobei zur Auswertung einer zeitlichen Reihe von Mikroskopbildern, die Intensitätsverteilungen von Fluoreszenzereignissen der Probe (22) enthalten, wobei die Intensitätsverteilungen beugungsbedingt eine jeweilige Ausdehnung aufweisen, die einer Ausdehnung einer Punktübertragungsfunktion des Mikroskops (1) entspricht, und jeweils innerhalb der Mikroskopbilder zumindest überwiegend überlappungsfrei angeordnet sind, die Schritte b) und c) für jedes Mikroskopbild wiederholt werden.

9. Verfahren nach dem vorhergehenden Anspruch, wobei jeweils nach Auswertung einer vorgegebenen Anzahl von Mikroskopbildern ein Stand eines Zählers protokolliert und der Zähler initialisiert wird.

10. Verfahren nach einem der vorhergehenden Ansprüche, wobei im Falle einer umschaltbar zweifarbig fluoreszierenden Fluorophorsorte in Schritt c) das Hochzählen nur dann durchgeführt wird, wenn in einer zeitlichen Reihe von Mikroskopbildern an demselben Ort in aufeinanderfolgenden Mikroskopbildern abwechselnd beide Fluoreszenzfarben identifiziert werden.

## Claims

1. Method for recording and evaluating a microscope image (2) containing intensity distributions of fluorescence events of a sample (22) marked with transformable fluorophores, wherein the intensity distributions have a respective extent due to diffraction that corresponds to an extent of a point spread function of the microscope (1) and said intensity distributions are arranged without overlap, comprising the following steps carried out by a control unit (34):
a) initializing at least one counter per predetermined region (R, R1, R2) to be evaluated of the microscope image (2), with the regions to be evaluated being defined with an accuracy of at most a single pixel,
b) identifying fluorescence events in a region (R, R1, R2) to be evaluated of the microscope image (2), with a compensation calculation for localization with sub-pixel accuracy being dispensed with,
c) incrementing the counter corresponding to the relevant region (R, R1, R2) for each fluorescence event identified in the region (R, R1, R2), and
d) outputting the at least one counter as a number or concentration of the fluorophores in the relevant region (R, R1, R2),
wherein the microscope image (2) is recorded by means of a microscope (1) prior to step b) or prior to step a) by virtue of a subset of the transformable fluorophores being initially transformed into an excitable state in such a way that the transformed excitable fluorophores have a lower density than what is specified by the reciprocal of the unresolvable volume due to refraction and by virtue of the sample (22) subsequently being at least partly irradiated by excitation light by means of a light source (11, 23), wherein fluorescence radiation emitted by the sample (22) is imaged in diffraction-broadened fashion by means of a microscope objective (21) and by means of a light receiver (12, 28).

2. Method according to Claim 1, wherein a false-colour image is output on the basis of at least two counters.

3. Method according to Claim 1 or 2, wherein use is made of at least two counters and a quotient between the counters is formed and output as a stoichiometric relationship.

4. Method according to any one of the preceding claims, wherein the fluorescence events originate from different fluorophore types and a respective counter is initialized in step a) for each fluorophore type designated as evaluable in advance, per region (R, R1, R2) to be evaluated and there is additional identification in step b) that the fluorescence event corresponds to a fluorophore type to be evaluated and the counter corresponding to the relevant region (R, R1, R2) and to the relevant fluorophore type is incremented in step c).

5. Method according to any one of the preceding claims, wherein a first counter is used for a first region (R1) and a second counter is used for a second region (R2) that differs from the first.

6. Method according to any one of the preceding claims, wherein a correlation spectroscopic measurement or a Förster resonance energy transfer measurement is additionally performed on the sample (22).

7. Method according to any one of the preceding claims, wherein a laser scanning microscope is used for the transformation into the excitable state.

8. Method according to any one of the preceding claims, wherein steps b) and c) are repeated for each microscope image for the purposes of evaluating a time series of microscope images containing intensity distributions of fluorescence events of the sample (22), the intensity distributions having a respective extent due to diffraction that corresponds to an extent of a point spread function of the microscope (1) and said intensity distributions being arranged at least predominantly without overlap within the microscope images in each case.

9. Method according to the preceding claim, wherein a counter reading is logged and the counter is initialized after evaluating a predetermined number of microscope images in each case.

10. Method according to any one of the preceding claims, wherein incrementing in step c) in the case of a fluorophore type fluorescing switchably in two-colour fashion is only carried out if both fluorescence colours are identified alternately at the same location in successive microscope images within a temporal sequence of microscope images.

## Revendications

1. Procédé d'acquisition et d'évaluation d'une image de microscope (2) contenant des distributions d'intensité d'événements de fluorescence d'un échantillon (22) qui sont marqués avec des fluorophores transformables, les distributions d'intensité ayant une extension respective, liée à la diffraction, qui correspond à une extension d'une fonction de transfert de point du microscope (1) et étant disposées sans se chevaucher, le procédé comprenant les étapes suivantes réalisées par une unité de commande (34) :
a) initialiser au moins un compteur par région prédéterminée à évaluer (R, R1, R2) de l'image de microscope (2), les régions à évaluer étant définies avec une précision d'un seul pixel au maximum,
b) identifier des événements de fluorescence dans une région à évaluer (R, R1, R2) de l'image de microscope (2), un calcul de compensation d'une localisation à la précision d'un sous-pixel étant supprimé,
c) incrémenter le compteur, correspondant à la région concernée (R, R1, R2), pour chaque événement de fluorescence identifié dans la région (R, R1, R2), et
d) délivrer la sortie de l'au moins un compteur sous la forme d'un nombre ou d'une concentration de fluorophores dans la région concernée (R, R1, R2), l'image de microscope (2) étant acquise au moyen d'un microscope (1) avant l'étape b) ou avant l'étape a) d'abord par transformation d'un sous-ensemble de fluorophores transformables en un état excitable de sorte que les fluorophores excitables transformés aient une densité inférieure à celle de l'inverse d'un volume insoluble dépendant de la diffraction, puis par irradiation de l'échantillon (22) au moins partiellement avec de la lumière d'excitation au moyen d'une source de lumière (11, 23), un rayonnement de fluorescence émis par l'échantillon (22) étant reproduit, en étant diffusé par diffraction, au moyen d'un objectif de microscope (21) et au moyen d'un récepteur de lumière (12, 28).

2. Procédé selon la revendication 1, une image en fausse couleur étant délivrée en sortie sur la base d'au moins deux compteurs.

3. Procédé selon la revendication 1 ou 2, au moins deux compteurs étant utilisés et un quotient étant formé entre les compteurs et délivré en sortie sous la forme d'une relation stoechiométrique.

4. Procédé selon l'une des revendications précédentes, les événements de fluorescence provenant de différents types de fluorophores et un compteur respectif étant initialisé pour chaque région à évaluer (R, R1, R2) à l'étape a) et pour chaque type de fluorophore spécifié comme étant à évaluer et une identification étant en outre effectuée à l'étape b) pour savoir si l'événement de fluorescence correspond à un type de fluorophore à évaluer, et le compteur correspondant à la région concernée (R, R1, R2) et au type de fluorophore concerné étant incrémenté à l'étape c) .

5. Procédé selon l'une des revendications précédentes, un premier compteur étant utilisé pour une première région (R1) et un deuxième compteur étant utilisé pour une deuxième région (R2) différente de la première région.

6. Procédé selon l'une des revendications précédentes, une mesure spectroscopique de corrélation ou une mesure de transfert d'énergie de résonance selon Förster étant en outre effectuée sur l'échantillon (22) .

7. Procédé selon l'une des revendications précédentes, un microscope à balayage laser étant utilisé pour la transformation en l'état excitable.

8. Procédé selon l'une des revendications précédentes, les étapes b) et c) étant répétées pour chaque image de microscope pour évaluer une série temporelle d'images de microscope, qui contiennent des distributions d'intensité d'événements de fluorescence de l'échantillon (22), les distributions d'intensité présentant une extension respective, liée à la diffraction, qui correspond à une extension d'une fonction de transfert de point du microscope (1), et étant respectivement disposées à l'intérieur des images de microscope sans se chevaucher au moins dans une mesure importante.

9. Procédé selon la revendication précédente, l'état d'un compteur étant consigné, et le compteur initialisé, après chaque évaluation d'un nombre prédéterminé d'images de microscope.

10. Procédé selon l'une des revendications précédentes, dans le cas d'un fluorophore à deux couleurs fluorescentes commutables à l'étape c), le comptage n'étant effectué que lorsque les deux couleurs fluorescentes sont identifiées alternativement dans une série temporelle d'images de microscope au même endroit dans des images de microscope successives.
